# EUROPEAN PATENT APPLICATION

(11) **EP 2 131 517 A2**
(43) Date of publication of application: **09.12.2009**
(21) Application number: 09007312.3
(22) Date of filing: 02.06.2009
(51) Int. Cl.: H04L 1/18

(54) **Method and apparatus for improving HARQ uplink transmission**

(30) Priority: 03.06.2008 US 58215 P
(71) Applicant: Innovative Sonic Limited, Road Town Tortola (VG)
(72) Inventor: Kuo, Richard Lee-Chee, Taipei City Taiwan (TW)
(74) Representative: Hager, Thomas Johannes

(57) **Abstract**

The present invention provides a method for improving HARQ uplink transmission in a UE of a wireless communication system. The method includes the HARQ entity of the UE instructing an HARQ process to perform transmission or retransmission of a transport block according to an uplink grant allocated to the UE (402), and flushing all HARQ buffers for uplink transmission in the HARQ entity when a Time Alignment Timer of the UE expires (404).

## Description

The present invention relates to a method and apparatus for improving uplink transmission of Hybrid Automatic Repeat Request (HARQ) processes in a user equipment (UE) of a wireless communication system according to the pre-characterizing clauses of claims 1 and 8.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, a user equipment (UE) needs to be synchronized with a serving base station, i.e. the serving Node B, on uplink timing to prevent signals transmitted from the UE from colliding with those sent from other UEs under the coverage of the base station. A Time Alignment Timer of the UE is utilized for indicating whether the UE is synchronized with the base station on uplink timing. When the Time Alignment timer is running, uplink timing is considered synchronized. If the Time Alignment timer expires, then this indicates that the UE no longer has uplink synchronization with the base station. Besides, a Timing Alignment Command is transmitted by the base station to update a Timing Advance value of the UE for maintenance of uplink time alignment. Definition of the Timing Advance value can be referred in related specifications, and is not given herein.

In general, if the UE has established connection with the base station, the Timing Alignment Command is carried in a Timing Advance MAC Control Element for transmission. Otherwise, the Timing Alignment Command is transmitted through a Random Access Response message of a random access procedure. In addition, whenever the Timing Advance value is updated, the UE shall start or restart the Time Alignment timer. Detailed operations about how the UE maintains the uplink time alignment is described in the following.

According to the current specifications, when a Timing Advance MAC Control Element is received, the UE shall apply the carried Timing Alignment Command unconditionally, and starts or restarts the Time Alignment timer. However, if the Timing Alignment Command is received in a Random Access Response message, then the UE determines whether a Random Access Preamble and a Physical Random Access Channel (PRACH) resource used by the Random Access procedure are explicitly signaled by the base station. That is to say, the UE determines whether the random access procedure is Contention-based or Non-contention-based. If the random access procedure is Non-contention-based, the UE directly applies the Timing Alignment Command carried in the Random Access Response message, and starts or restarts the Time Alignment timer.

Conversely, if the random access procedure is Contention-based, only when the Time Alignment timer is not running or has expired, i.e., uplink timing of the UE is not synchronized, the UE applies the Timing Alignment Command carried in the Random Access Response message, and starts or restarts the Time Alignment timer. If the Time Alignment timer is running, which implies previous Timing Alignment information is still valid, the UE then ignores the received Timing Alignment Command.

Under situations that the Time Alignment timer is not running or has expired, prior to any uplink transmission, the UE shall use the Random Access Procedure to obtain Timing Alignment information in order to obtain uplink time alignment. This indicates the UE should not perform any uplink transmission when the uplink timing of the UE is not synchronized with the base station.

In the prior art, when the UE has new uplink data to transmit, a Buffer Status Reporting (BSR) may be triggered to provide the serving Node B with information about the amount of data in uplink buffers of the UE. If no uplink grant is available, a Scheduling Request (SR) procedure shall be triggered to request the network to allocate uplink transmission resource. In such a situation, if the UE has configured Physical Uplink Control Channel (PUCCH) resource, the SR procedure is performed via PUCCH signaling. Otherwise, the SR procedure is performed via the Random Access Procedure.

In other words, when the UE has new uplink data to transmit but has no PUCCH resource for the SR procedure, the Random Access Procedure is triggered. At this time, the uplink timing of the UE may still be synchronized with the base station, i.e., the Time Alignment timer is still running. Under this situation, based on the above operation, the Timing Alignment Command received in the Random Access Response message would be ignored. However, if the Time Alignment timer expires after reception of the Random Access Response message, since the UE cannot update the Timing Advance value according to the latest received Timing Alignment Command, the uplink timing of the UE becomes non-synchronized. Consequently, even though uplink grant has been allocated to the UE, transmission (or retransmission) of a message 3 of the Random Access procedure is not allowed since uplink transmission in non-synchronized state may result in system malfunction, e.g. cause interference to uplink transmissions from other UEs.

More specifically, according to the current MAC specification, upon reception of the uplink grant, a Hybrid Automatic Repeat Request (HARQ) entity of the UE will instruct a corresponding HARQ process to generate a transmission of a transport block. Even though the network does not allocate uplink grants for each retransmission of the transport block, non-adaptive retransmission can be preformed based on the previously allocated uplink grant. Thus, in the above case that the Time Alignment timer expires after reception of the Random Access Response message, the UE may still perform uplink transmission or retransmission in non-synchronized state, which causes interference to uplink transmissions from other UEs.

Besides, for uplink transmission in normal connected mode, it is also possible that the Time Alignment timer expires after the uplink grant is allocated, e.g. the UE misses the Timing Advance MAC Control Element transmitted by the base station. Since the uplink timing alignment information cannot be updated promptly, uplink transmission may be performed in non-synchronized state, causing system malfunction.

This in mind, the present invention aims at providing a method and apparatus for improving HARQ uplink transmission in a UE of a wireless communications system, so as to avoid system malfunction.

This is achieved by a method and apparatus for improving Hybrid Automatic Repeat Request (HARQ) uplink transmission in a user equipment (UE) of a wireless communication system according to the pre-characterizing clauses of claims 1 and 8. The dependent claims pertain to corresponding further developments and improvements.

As will be seen more clearly from the detailed description following below, the claimed method for improving Hybrid Automatic Repeat Request (HARQ) uplink transmission in a user equipment (UE) of a wireless communication system includes steps of instructing an HARQ process to perform transmission or retransmission of a transport block according to an uplink (UL) grant allocated to the UE by an HARQ entity of the UE; and flushing all HARQ buffers for uplink transmission in the HARQ entity when a Time Alignment Timer of the UE expires.

In the following, the invention is further illustrated by way of example, taking reference to the accompanying drawings. Thereof
FIG.1 is a schematic diagram of a wireless communications system.
FIG.2 is a function block diagram of a wireless communications device.
FIG.3 is a diagram of program code of FIG.2.
FIG.4 is a flowchart of a process according to an embodiment of the present invention.

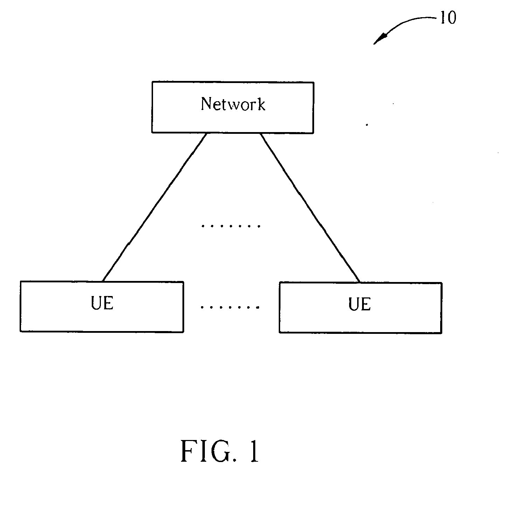

Please refer to FIG.1, which illustrates a schematic diagram of a wireless communications system 10. The wireless communications system 10 is preferred to be an LTE (long-term evolution) system, and is briefly composed of a network and a plurality of user equipments (UEs). In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

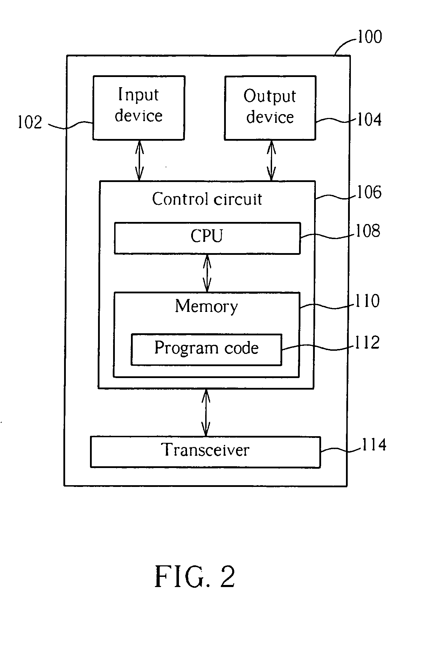

Please refer to FIG.2, which is a functional block diagram of a communications device 100 in a wireless communications system. The communications device 100 can be utilized for realizing the UEs in FIG .1, and the wireless communications system is preferably the LTE system. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

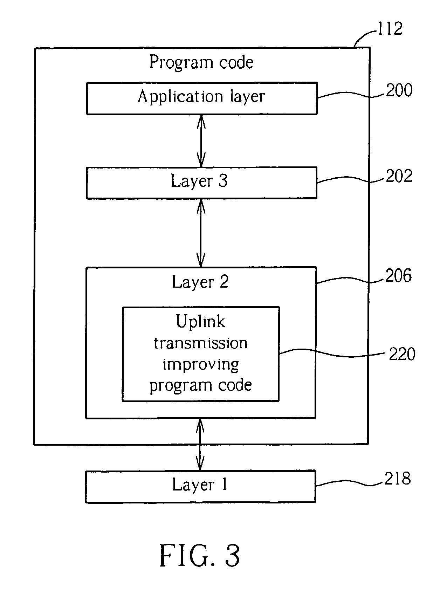

Please continue to refer to FIG.3. FIG.3 is a diagram of the program code 112 shown in FIG.2. The program code 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In the LTE system, the MAC layer performs a Random Access procedure and Hybrid Automatic Repeat Request (HARQ) processes for transmission of MAC transport blocks, i.e. MAC protocol data units (MAC PDUs). Each HARQ process is associated with an HARQ buffer, used for data storage of the HARQ process, respectively. In addition, the MAC layer utilizes a Time Alignment Timer for indicating whether the UE is synchronized with the base station on uplink timing. When the Time Alignment timer is running, uplink timing is considered synchronized. Conversely, if the Time Alignment timer expires, then this indicates that the UE no longer has uplink synchronization with the base station.

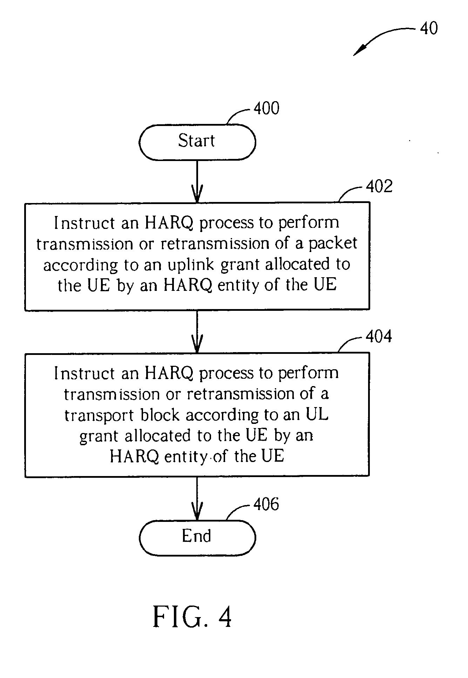

In such a situation, the embodiment of the present invention provides an uplink transmission improving program code 220 for improving uplink transmission of the HARQ processes to avoid system malfunction. Please refer to FIG.4, which illustrates a schematic diagram of a process 40. The process 40 is utilized for improving HARQ uplink transmission in a UE of the wireless communications system 10, and can be compiled into the uplink transmission improving program code 220. The process 40 includes the following steps:
Step 400: Start.
Step 402: Instruct an HARQ process to perform transmission or retransmission of a transport block according to an uplink (UL) grant allocated to the UE by an HARQ entity of the UE.
Step 404: Flush all HARQ buffers for uplink transmission in the HARQ entity when a Time Alignment Timer of the UE expires.
Step 406: End.

According to the process 40, the HARQ entity of the UE instructs an HARQ process to perform transmission or retransmission of a transport block according to an UL grant allocated to the UE. Then, the UE flushes all HARQ buffers for uplink transmission in the HARQ entity when the Time Alignment Timer of the UE expires. Consequently, the embodiment of the present invention can prevent the HARQ processes of the UE from performing uplink transmission in a non-synchronized state, and thus avoids interference to uplink transmissions from other UEs.

As stated in the prior art, when a Buffer Status Reporting (BSR) is triggered by the event that the UE has new uplink data to transmit, if no uplink grant is available, a Scheduling Request (SR) procedure is further triggered to request the network to allocate uplink transmission resource. In such a situation, if the UE has no configured Physical Uplink Control Channel (PUCCH) resources, the SR procedure is performed via a Random Access Procedure.

According to the current specification, if the Random Access procedure is a Contention-based random access procedure, when the Time Alignment timer is running, the UE shall ignore the Timing Alignment Command received in the Random Access Response message. In addition, the HARQ entity of the UE would instruct an HARQ process to transmit or retransmit a transport block including message 3 of the random access procedure (i.e. a MAC PDU for Contention Resolution) according to the uplink grant carried by the Random Access Response message. At this time, even though the network does not allocate any uplink grant for each retransmission of the transport block, non-adaptive retransmission can still be preformed based on the previously allocated uplink grant.

Thus, the embodiment of the present invention flushes all HARQ buffers for uplink transmission in the HARQ entity upon expiration of the Time Alignment timer, so that uplink transmission of the UE in the non-synchronization state can be terminated. Consequently, signals transmitted from the UE can be prevented from colliding with those sent from other UEs under the coverage of the base station.

Please note that, the above embodiment is merely an exemplary illustration of the present invention. The process 30 of the present invention can also be applied to other cases of HARQ uplink transmissions, such as the uplink grant is transmitted via Physical Downlink Control Channel (PDCCH) signaling, which also belongs to the scope of the present invention.

In summary, the embodiment of the present invention flushes all HARQ buffers for uplink transmission in the HARQ entity upon expiration of the Time Alignment timer, so that uplink transmission of the UE in the non-synchronization state can be terminated. Consequently, the signals transmitted from the UE can be prevented from colliding with those sent from other UEs under the coverage of the base station.

## Claims

1. A method for improving Hybrid Automatic Repeat Request, named HARQ hereinafter, uplink transmission in a user equipment, named UE hereinafter, of a wireless communication system, the method comprises:
instructing an HARQ process to perform transmission or retransmission of a transport block according to an uplink grant allocated to the UE by an HARQ entity of the UE (402); and
**characterized by** flushing all HARQ buffers for uplink transmission in the HARQ entity when a Time Alignment Timer of the UE expires (404).

2. The method of claim 1, **characterized in that** the Time Alignment Timer is utilized for indicating whether the UE is synchronized with a base station of the wireless communication system on uplink timing.

3. The method of claim 2, **characterized in that** expiration of the Time Alignment Timer indicates that the UE is not synchronized with the base station on the uplink timing.

4. The method of claim 1, **characterized in that** the UE starts or restarts the Time Alignment Timer when a Timing Advance value of the UE is configured or updated.

5. The method of claim 1, **characterized in that** the uplink grant is carried by a Random Access Response message or a Physical Downlink Control Channel, named PDCCH hereinafter, signaling.

6. The method of claim 5, **characterized in that** the Random Access Response message is generated by a Contention-based Random Access procedure.

7. The method of claim 1, **characterized in that** the retransmission of the transport block is a non-adaptive retransmission.

8. A communication device (100) for improving Hybrid Automatic Repeat Request, named HARQ hereinafter, uplink transmission in a user equipment, named UE hereinafter, of a wireless communication system, the communication device (100) comprising:
a processor (108) for executing a program code (112); and
a memory (110) coupled to the processor (108) for storing the program code (112); the program code (112) comprises:
instructing an HARQ process to perform transmission or retransmission of a transport block according to an uplink grant allocated to the UE by an HARQ entity of the UE (402); and
**characterized by** flushing all HARQ buffers for uplink transmission in the HARQ entity when a Time Alignment Timer of the UE expires (404).

9. The communication device (100) of claim 8, **characterized in that** the Time Alignment Timer is utilized for indicating whether the UE is synchronized with a base station of the wireless communication system on uplink timing.

10. The communication device (100) of claim 9, **characterized in that** expiration of the Time Alignment Timer indicates that the UE is not synchronized with the base station on the uplink timing.

11. The communication device (100) of claim 8, **characterized in that** the Time Alignment Timer is started or re-started when a Timing Advance value of the UE is configured or updated.

12. The communication device (100) of claim 8, **characterized in that** the uplink grant is carried by a Random Access Response message or a Physical Downlink Control Channel, named PDCCH hereinafter, signaling.

13. The communication device (100) of claim 12, **characterized in that** the Random Access Response message is generated by a Contention-based Random Access procedure.

14. The communication device (100) of claim 8, **characterized in that** the retransmission of the transport block is a non-adaptive retransmission.
